# EUROPEAN PATENT APPLICATION

(11) **EP 4 841 480 A1**
(43) Date of publication of application: **18.11.2026**
(21) Application number: 25738586.4
(22) Date of filing: 10.01.2025
(51) Int. Cl.: G06F 16/957, G06Q 50/00

(54) **PAGE DISPLAY METHOD AND APPARATUS, DEVICE, AND STORAGE MEDIUM**

(30) Priority: 12.01.2024 CN 202410052017
(71) Applicant: Beijing Zitiao Network Technology Co., Ltd., Beijing 100190 (CN)
(72) Inventor: ZHAO, Yuxuan, Beijing 100028 (CN); SUN, Yuze, Beijing 100028 (CN)
(74) Representative: Grünecker Patent- und Rechtsanwälte PartG mbB
(86) International application number: PCT/CN2025/071885
(87) International publication number: WO 2025/149059

(57) **Abstract**

The present disclosure provides a page display method and apparatus, a device, and a storage medium, which relate to the field of computer technologies. The method includes: at a first user side, displaying a password input page in response to a group chat creation operation; displaying, in the password input page, a candidate password set including a plurality of candidate passwords of a preset type and/or a password input control; and creating, in response to a selection operation input for a target candidate password or the input of a target text password, a target group chat, and displaying a chat page of the created target group chat based on the password input control, where the target group chat includes at least the first user.

## Description

### CROSS-REFERENCE TO RELATED APPLICATION(S)

The display application claims priority to Chinese Patent Application No. 202410052017.5, filed on January 12, 2024, and entitled " PAGE DISPLAY METHOD AND APPARATUS, DEVICE, AND STORAGE MEDIUM ", the disclosures of which is incorporated herein by reference in its entirety.

### FIELD

Embodiments of the present disclosure relate to the field of computer technologies, and in particular, to a method and a page display apparatus, a device, and a storage medium.

### BACKGROUND

With the rapid development of information technologies and the popularization of mobile internet, functions of applications are more and more abundant. In some functions, group chat conversations are supported to create, and a plurality of users may exchange messages in the group chat conversations.

### SUMMARY

Embodiments of the present disclosure provide a page display method and an apparatus, a device, and a storage medium.

In a first aspect, an embodiment of the present disclosure provides a page display method, which, at a first user side, includes: displaying a password input page in response to a group chat creation operation; displaying a candidate password set and/or a password input control in the password input page, where the candidate password set includes a plurality of candidate passwords of a preset type; creating, in response to a selection operation input for the target candidate password or inputting the target text password based on the password input control, a target group chat, and displaying a chat page of the created target group chat based on a target candidate password or a target text password, where the target candidate password is a candidate password in the candidate password set, and the target group chat includes at least the first user.

In a second aspect, an embodiment of the present disclosure further provides a page display apparatus, which is configured at a first user side and includes: a password input page display module, configured to display a password input page in response to a group chat creation operation; a display module, configured to display a candidate password set and/or a password input control in the password input page, where the candidate password set includes a plurality of candidate passwords of a preset type; a chat page display module, configured to create, in response to a selection operation input for the target candidate password or inputting the target text password based on the password input control, a target group chat, and display a chat page of the created target group chat based on a target candidate password or a target text password, where the target candidate password is a candidate password in the candidate password set, and the target group chat includes at least the first user.

In a third aspect, an embodiment of the present disclosure further provides an electronic device, including: one or more processors, a storage apparatus, configured to store one or more programs, the one or more programs, when executed by the one or more processors, cause the one or more processors to implement the page display method provided by the embodiments of the present disclosure.

In a fourth aspect, an embodiment of the present disclosure further provides a storage medium including computer-executable instructions, the computer-executable instructions, when executed by a computer processor, are used to perform the page display method provided by the embodiments of the present disclosure.

According to the page display solution provided by the embodiments of the present disclosure, at the first user side, the password input page is displayed in response to the group chat creation operation; the candidate password set including the plurality of candidate passwords of the preset type and/or the password input control are displayed in the password input page; the target group chat is created in response to the selection operation input for the target candidate password or inputting the target text password based on the password input control, and the chat page of the created target group chat is displayed, where the target group chat includes at least the first user.

### BRIEF DESCRIPTION OF THE DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the originals and elements are not necessarily drawn to scale.
Fig. 1 is a schematic flowchart of a page display method provided by an embodiment of the present disclosure;
Fig. 2a is a schematic diagram of interface interaction of a page display method provided by an embodiment of the present disclosure;
Fig. 2b is a schematic diagram of interface interaction of a page display method provided by an embodiment of the present disclosure;
Fig. 3 is a schematic diagram of interface interaction of another page display method provided by an embodiment of the present disclosure;
Fig. 4 is a schematic flowchart of another page display method provided by an embodiment of the present disclosure;
Fig. 5 is a schematic diagram of interface interaction of another page display method provided by an embodiment of the present disclosure;
Fig. 6 is a schematic structural diagram of a page display apparatus provided by an embodiment of the present disclosure; and
Fig. 7 is a schematic structural diagram of an electronic device provided by an embodiment of the present disclosure.

### DETAILED DESCRIPTION OF EMBODIMENTS

Embodiments of the present disclosure are described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and embodiments of the present disclosure are only for exemplary purposes and are not intended to limit the protection scope of the present disclosure.

It should be understood that the various steps described in the method implementations of the present disclosure may be performed in different orders and/or in parallel. Furthermore, the method implementations may include additional steps and/or omit to perform the illustrated steps. The scope of the present disclosure is not limited in this respect.

The term "include/comprise" and its variants used herein are open-ended inclusions, that is, "include/comprise but not limited to". The term "based on" is "at least partially based on". The term "an embodiment" means "at least one embodiment"; the term "another embodiment" means "at least one other embodiment"; the term "some embodiments" means "at least some embodiments". Relevant definitions of other terms will be given in the following description.

It should be noted that the concepts such as "first" and "second" mentioned in the present disclosure are only used to distinguish different apparatuses, modules or units, and are not used to limit the order or interdependence of the functions performed by these apparatuses, modules or units.

It should be noted that the modifiers of "one" and "a plurality of" mentioned in the present disclosure are illustrative and not restrictive, and those skilled in the art should understand that unless otherwise clearly indicated in the context, they should be understood as "one or more".

The names of messages or information exchanged between a plurality of apparatuses in the implementations of the present disclosure are only for illustrative purposes, and are not intended to limit the scope of these messages or information.

It may be understood that before using the technical solutions disclosed in the embodiments of the present disclosure, the user should be informed of the type, range of use, use scenarios, etc. of personal information involved in the present disclosure and obtain the authorization of the user in an appropriate manner in accordance with relevant laws and regulations.

For example, in response to receiving an active request from a user, prompt information is sent to the user to clearly prompt the user that the requested operation will require access to and use of personal information of the user. In this way, the user may independently choose whether to provide the personal information to software or hardware, such as an electronic device, an application, a server, or a storage medium, that performs the operations of the technical solutions of the present disclosure based on the prompt information.

As an optional but non-limiting implementation, in response to receiving the active request from the user, the manner of sending the prompt information to the user, for example, may be the manner of a pop-up window, and the prompt information may be displayed in the pop-up window in text. In addition, the pop-up window may also carry a selection control for the user to select "agree" or "disagree" to provide the personal information to the electronic device.

It may be understood that the above process of notifying and obtaining user authorization is only illustrative and does not limit the implementations of the present disclosure, and other manners that satisfy relevant laws and regulations may also be applied to the implementations of the present disclosure.

It may be understood that the data involved in the technical solution (including but not limited to the data itself, acquisition or use of the data) should comply with requirements of corresponding laws, regulations and related provisions.

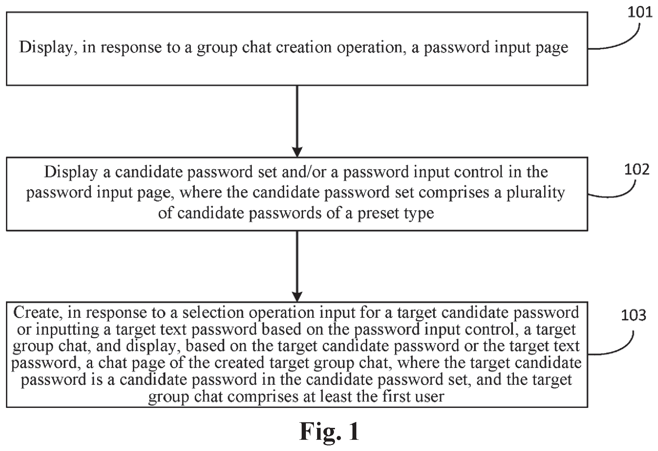

Fig. 1 is a schematic flowchart of a page display method provided by an embodiment of the present disclosure. The embodiment of the present disclosure is applicable to the case of creating a group chat, and the method may be executed by a page display apparatus. The apparatus may be implemented in the form of software and/or hardware, and optionally, by an electronic device. The electronic device may be a mobile terminal, such as a mobile phone, a smart watch, a tablet computer, and a personal digital assistant, and may also be a device, such as a personal computer (PC) or a server. The method is applied to a first user side, that is, the electronic device may be configured as a first user side device, and the first user side device is an electronic device used by a first user.

As shown in Fig. 1, the method includes the following steps.

Step 101: a password input page is displayed in response to a group chat creation operation.

Exemplarily, the group chat may be a chat involving a plurality of users, and specifically may be an instant messaging chat. The users in the group chat may interact with each other by sending chat messages and the like, and the chat messages may include content such as texts, symbols, images, audios, and videos.

Exemplarily, the group chat creation operation may be input based on a preset entry, and the preset entry, for example, may be a creation control, that is, the group chat creation operation may be input by triggering the creation control. The display position, the display style and the like of the preset entry are not limited.

Optionally, the preset entry is included in preset media content in a preset media stream, and/or, the preset entry is included in a preset page; where preset prompt information is further displayed in the preset page, and the preset prompt information is used to prompt to obtain a preset virtual resource by creating a group chat. In this way, rich entries may be provided to trigger the creation of the group chat, further improving the convenience of creating the group chat.

The preset media stream may include a plurality of pieces of media content, and the media content may include at least one of image content, audio content and video content, and specifically may include, for example, pictures, images and texts, videos, live streams, and the like. When viewing the media content in a media stream display page, the user may quickly input the group chat creation operation through the preset entry displayed in the media stream display page.

The preset virtual resource may include a coupon or a red envelope, etc. The preset entry and the preset prompt information are displayed in the preset page, and when viewing the preset page, the user may create the group chat by triggering the preset entry, thereby obtaining the preset virtual resource, and further improving the interaction effect.

Optionally, the preset page may be a media stream display page.

In the embodiment of the present disclosure, the password input page may be a preset page for the user to select a group chat password or input a text password, and the password may be understood as a password used to create the group chat.

Step 102: a candidate password set and/or a password input control is displayed in the password input page, where the candidate password set includes a plurality of candidate passwords of a preset type.

Exemplarily, the candidate passwords may be preset passwords. The preset type may include, for example, a text type and/or an image type. In this way, the types of passwords may be enriched, and texts and/or images may be used to provide richer visual information for the passwords, thereby improving the password selection efficiency.

Optionally, the candidate password set is associated with a preset theme. In this way, the user may know in advance the theme atmosphere of the group chat to be created when selecting a candidate password, which adds topics to the interaction in the group chat, and improves the interaction efficiency and interaction effect. The preset theme may be related to festivals or activities, such as a Spring Festival theme or a birthday activity theme.

Exemplarily, the plurality of candidate passwords may be displayed in the password input page in the form of a list or a matrix.

Exemplarily, the display position of the password input control is not limited. When the candidate password set and the password input control are displayed in the password input page, the relative display positions of the candidate password set and the password input control may be preset, for example, the display position of the password input control is below the display position of the candidate password set. The password input control may be an input button or an input panel, and the input panel may be displayed by triggering the input button. The input panel may specifically be a virtual keyboard control or a virtual handwriting pad control.

Step 103: a target group chat is created in response to a selection operation input for the target candidate password or inputting the target text password based on the password input control, and a chat page of the created target group chat is displayed based on the target candidate password or the target text password, where the target candidate password is a candidate password in the candidate password set, and the target group chat includes at least the first user.

Exemplarily, when the candidate password set is displayed in the password input page, the first user may select one candidate password from the candidate password set as the target candidate password to create the group chat, and the created group chat is recorded as the target group chat. When the password input control is displayed in the password input page, the first user may input a text password based on the password input control, and the input text password is recorded as the target text password.

Optionally, the target group chat includes a first target user who performs the selection operation for the target candidate password and/or a second target user who inputs the target text password based on the password input control. In this way, the users who want to join the target group chat may communicate in advance to determine the candidate password to be selected (that is, the target candidate password) or the text password to be input (that is, the target text password). The user who inputs the selection operation for the target candidate password is recorded as the first target user, and the user who inputs the target text password based on the password input control is recorded as the second target user, so that the effect of quickly creating a group chat based on the selection of the same candidate password may be achieved.

Optionally, the user who wants to join the same group chat may be supported to input the password in different manners. For example, in the case that the target candidate password is the same as the target text password, the user may be allowed to join the target group chat by inputting the selection operation for the target candidate password or inputting the target text password based on the password input control, and the target group chat may include the first target user and/or the second target user. In this case, the first target user or the second target user includes the first user.

Optionally, the target group chat includes a target user satisfying a preset condition (the target user may include the first target user and/or the second target user), and the preset condition may be set according to the actual situation, for example, it may be verified based on factors such as time and/or space, for example, the preset condition includes a time condition and/or a space condition. For example, the spatial condition may be that the distance between users is less than a preset distance threshold. Specifically, with sufficient authorization of the users, whether the preset condition is satisfied may be determined based on the distance between the devices used by the users. For another example, the time condition may be that the selection operation is input or the target text password is input within a preset time range. The start time of the preset time range may be determined based on the selection time or the input time of the first user who selects the target candidate password or inputs the target text password. The preset time range ends after a preset duration from the start time.

Exemplarily, the number of target users is not limited, and since different users may input the selection operation for the target candidate password or input the target text password based on the password input control at different times, the number of target users may be dynamically changed. For example, it is assumed that user A is the first user who selects the target candidate password, and at this time, the number of target users may be 1. If user B selects the target candidate password, user B joins the target group chat, and the number of target users changes to 2, and so on.

Exemplarily, after the first user inputs the selection operation for the target candidate password or inputs the target text password based on the password input control, the target group chat may be created on the first user side, and the chat page of the created target group chat may be displayed based on the target candidate password or the target text password. The first user may send chat messages based on the chat page to interact with other users in the group chat.

Exemplarily, displaying the chat page of the created target group chat based on the target candidate password or the target text password may specifically be: displaying the chat page of the created target group chat, and displaying the target candidate password or the target text password in the chat page. For example, the target candidate password or the target text password is displayed at a preset position in a chat message display area of the chat page. For another example, a chat identification of the target group chat is displayed in the chat page, and the chat identification is determined based on the target candidate password or the target text password. Therefore, the chat identification may be quickly determined based on the target candidate password or the target text password, which saves the setting operation of the chat identification and further improves the efficiency of creating the group chat.

Exemplarily, the chat identification may include a chat name and a chat icon, and the chat icon may be used as an avatar of the target group chat. If the preset type is the text type, the text content of the target candidate password may be used as the chat name of the target group chat; if the preset type is the image type, the image content of the target candidate password may be used as the chat icon of the target group chat; if the preset type includes both the text type and the image type, that is, the target candidate password includes both the text content and the image content, the text content may be used as the chat name, and the image content may be used as the chat icon.

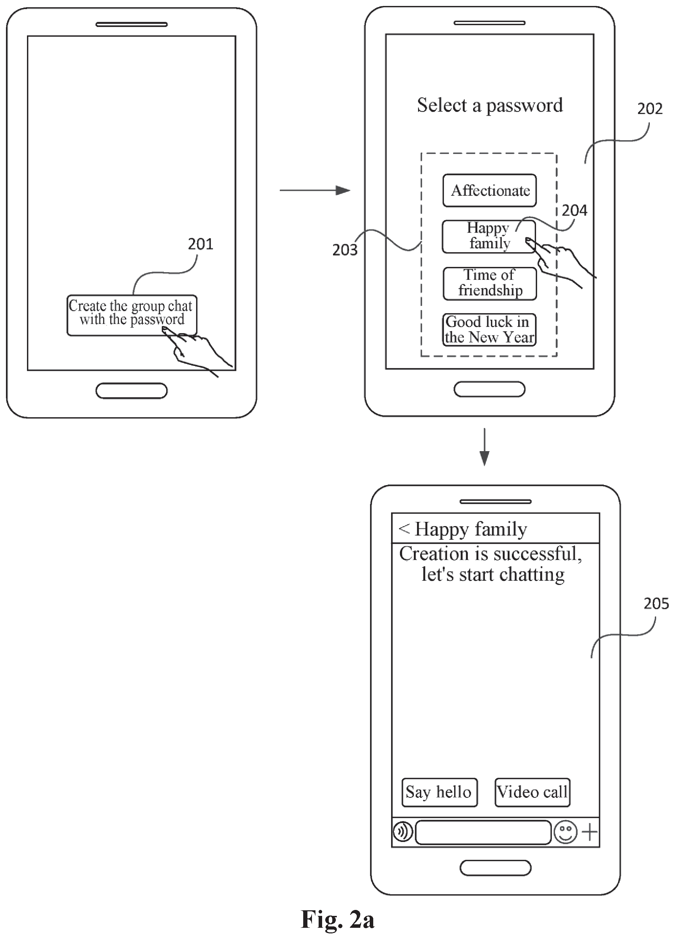

Fig. 2a is a schematic diagram of interface interaction of a page display method provided by an embodiment of the present disclosure. As shown in Fig. 2a, a group chat creation operation, for example, may be a trigger operation for a creation control, such as clicking on a "create a group chat with a password" control 201 in Fig. 2a to display a password input page 202. A candidate password set 203 is displayed in the password input page 202, and the candidate password set 203 includes four candidate passwords of a text type. After the user inputs a selection operation for a target candidate password 204, a chat page 205 of a created target group chat is displayed based on the target candidate password 204, for example, the target candidate password 204 is displayed in the chat page 205 as the group name of the target group chat.

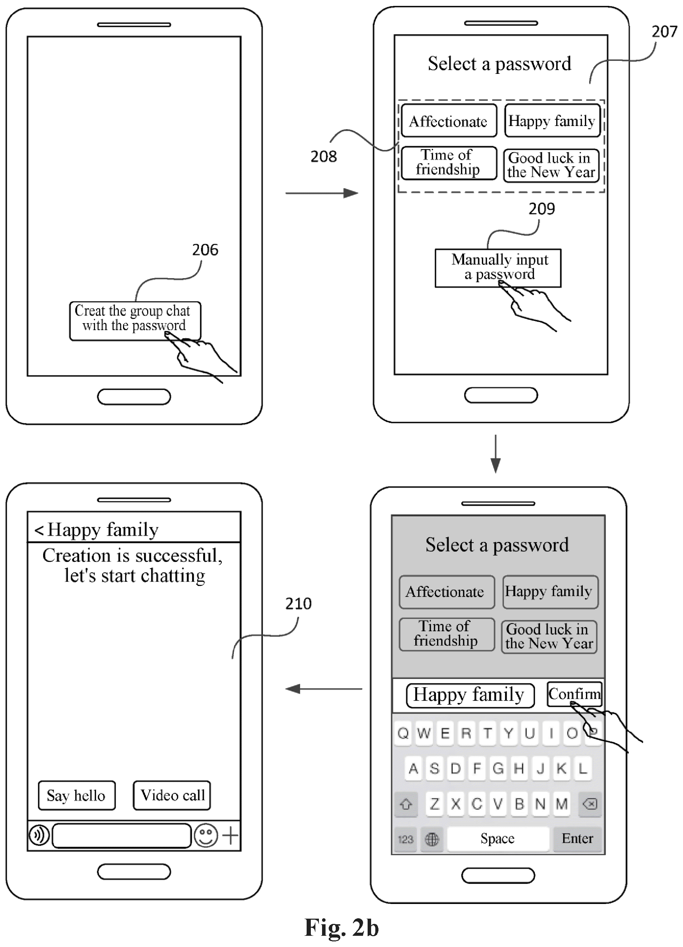

Fig. 2b is a schematic diagram of interface interaction of a page display method provided by an embodiment of the present disclosure. As shown in Fig. 2b, a group chat creation operation, for example, may be a trigger operation for a creation control, such as clicking on a "create a group chat with a password" control 206 in Fig. 2b to display a password input page 207. A candidate password set 208 and a password input control 209 are displayed in the password input page 207. After the user triggers the password input control 209, an input panel is displayed, and a chat page 210 of a created target group chat is displayed based on an input target text password (for example, "happy family"), for example, the target text password is displayed in the chat page 210 as the group name of the target group chat. It may be understood that the password input page 207 may also not include the candidate password set 208, but only display the password input control 209.

According to the page display method in the embodiment of the present disclosure, at the first user side, the password input page is displayed in response to the group chat creation operation, the candidate password set including the plurality of candidate passwords of the preset type and/or the password input control are displayed in the password input page, the target group chat is created in response to the selection operation input for the target candidate password or inputting the target text password based on the password input control, and the chat page of the created target group chat is displayed, where the target group chat includes at least the first user. With the above technical solution, the chat page of the group chat is displayed based on the selection or input of the password, thereby improving the interaction efficiency and interaction effect.

In some embodiments, the creating a target group chat and displaying a chat page of the created target group chat based on the target candidate password or the target text password in response to a selection operation input for the target candidate password or inputting the target text password based on the password input control includes: creating the target group chat and displaying a user set page of the created target group chat in response to the selection operation input for the target candidate password or inputting the target text password based on the password input control; displaying a target user identification set and a preset control in the user set page, where the target user identification set includes a user identification of the first target user and/or a user identification of the second target user; and displaying the chat page of the target group chat based on the target candidate password or the target text password in response to a trigger operation for the preset control. In this way, at the first user side, the first user may intuitively view the users who also join the target group chat, including the users who input the same password or the users who are already in the target group chat, before entering the chat page.

Exemplarily, the user identification may include a user name and/or a user avatar. After the user set page is displayed, the number of user identifications in the target user identification set may be dynamically increased. Taking the manner of creating a group by selecting the target candidate password as an example, it is assumed that user A is the first user, and user A is the first user who selects the target candidate password. When first entering the user set page, other users may not have selected the target candidate password yet, so the user identification in the target user identification set may be the user identification of user A. After user B selects the target candidate password, the display of the user identification of user B may be dynamically added to the target user identification set. It is assumed that user A is the first user, and user A is the third user who selects the target candidate password. When first entering the user set page, user B and user C have already selected the target candidate password, and the user identifications in the target user identification set may be the user identifications of user A, user B, and user C. If user D subsequently selects the target candidate password, the display of the user identification of user D may be dynamically added to the target user identification set.

Optionally, an associated control of a target user identification in the target user identification set may also be displayed in the user set page, and the associated control is used to establish a preset relationship between the first user and the user to whom the target user identification belongs, and the preset relationship may be the relationship in the application to which the password input page belongs.

In some embodiments, the method may further include: displaying a chat identification of the target group chat in the user set page, where the chat identification is determined based on the target candidate password. Therefore, the chat identification determined based on the target candidate password may be known before entering the chat page, thereby improving the interaction efficiency.

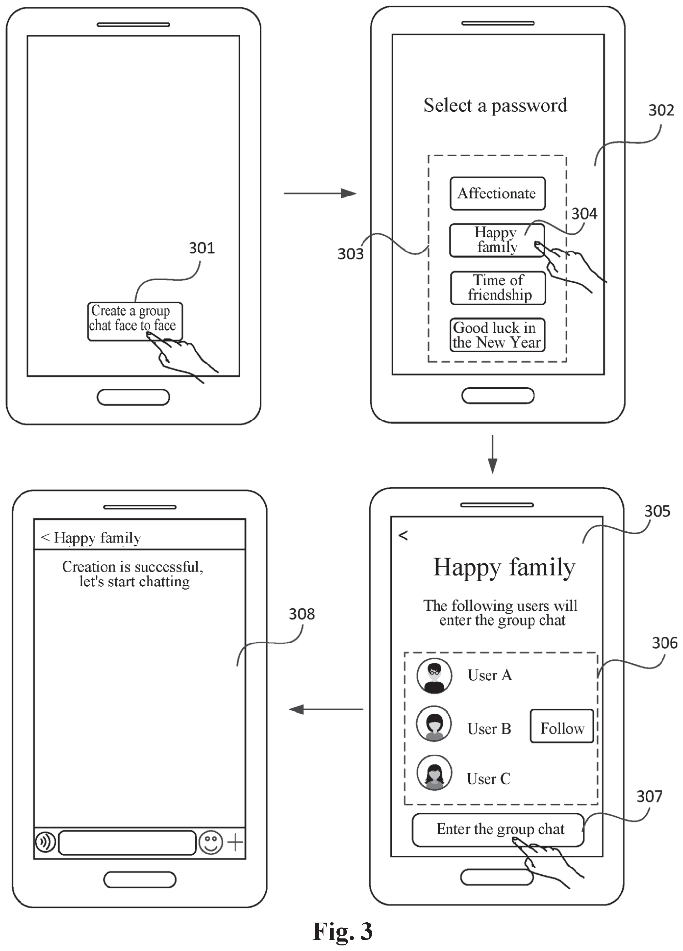

Fig. 3 is a schematic diagram of interface interaction of another page display method provided by an embodiment of the present disclosure. As shown in Fig. 3, a group chat creation operation, for example, may be a trigger operation for a creation control, such as clicking on a "create a group chat face to face" control 301 in Fig. 3 to display a password input page 302. A candidate password set 303 is displayed in the password input page 302, and the candidate password set 303 includes four candidate passwords of a text type associated with the Spring Festival theme, which are "affectionate", "happy family", "time of friendship", and "good luck in the New Year". After user A (the first user) inputs a selection operation for a target candidate password 304, a user set page 305 of a created target group chat is displayed. A chat name "happy family" of the target group chat, a target user identification set 306, and a preset control 307 are displayed in the user set page 305. The target user identification set 306 includes user identifications of user A, user B, and user C, where user B and user C have already selected the target candidate password before user A selects the target candidate password 304. After user A triggers the preset control 307, a chat page 308 of the target group chat may be entered, and the chat name "happy family" of the target group chat is displayed in the chat page 308.

In some embodiments, after displaying the candidate password set in the password input page, the method further includes: updating the candidate password set in response to an edit operation for the candidate password set. In this way, the user may be supported in independently editing the candidate password set, thereby improving the flexibility of creating the group chat with the password.

Exemplarily, after the candidate password set is updated, the update result may be synchronously displayed on the first user side and the user side that meets the preset condition. The edit operation for the candidate password set, for example, may be an edit operation for the password content of at least one of the candidate passwords, for example, changing "good luck in the New Year" to "happy New Year" through text editing. The edit operation for the candidate password set, for example, may also be a batch edit operation for the candidate passwords in the candidate password set, for example, displaying a preset update control such as "change a batch" in the password input page, and the candidate passwords in the candidate password set may be all changed to new candidate passwords by triggering the preset update control.

In some embodiments, the password input page is displayed in response to the group chat creation operation input based on the preset entry, where the candidate password set is associated with the preset entry. In this way, different preset entries may correspond to different candidate password sets, and the difference between the different candidate password sets may be reflected in that there is at least one candidate password with different password content.

Exemplarily, the preset entry may be included in the preset media content in the preset media stream, and may also be included in the preset page. After the user inputs the group chat creation operation based on the preset entry included in the preset media content in the preset media stream, a first candidate password set is displayed in the password input page. After the user inputs the group chat creation operation based on the preset entry included in the preset page, a second candidate password set is displayed in the password input page, and the first candidate password set is different from the second candidate password set. Certainly, there may be other preset entries, which may be set according to actual needs.

In some embodiments, the displaying a password input page in response to a group chat creation operation input based on a preset entry includes: displaying the password input page in response to the group chat creation operation input based on the preset entry included in the preset page, and after the creating a target group chat and displaying a chat page of the created target group chat based on the target candidate password or the target text password in response to a selection operation input for the target candidate password or inputting the target text password based on the password input control, the method further includes: displaying a target control in the chat page; and displaying an acquisition page of the preset virtual resource in response to a trigger operation for the target control. In this way, the user may be facilitated to quickly enter the acquisition page of the preset virtual resource by triggering the target control after the group chat is successfully created, thereby improving the interaction efficiency and interaction effect.

Exemplarily, the acquisition page of the preset virtual resource may include a preset element associated with the preset virtual resource, and the preset element may include, for example, identification information of the preset virtual resource, and the identification information may include, for example, a resource name or a resource cover. A resource acquisition operation may be input based on the preset element to acquire the associated preset virtual resource. Optionally, the preset element is a dynamic effect element, and the dynamic effect element may be an element with a dynamic effect of a rain style. For example, the preset element including the image identification of the preset virtual resource moves from the upper right to the lower left of the interactive page in the rain style. The preset elements associated with the plurality of preset virtual resources may be simply referred to as resource rain.

In some embodiments, after the creating a target group chat and displaying a chat page of the created target group chat based on the target candidate password or the target text password in response to a selection operation input for the target candidate password or inputting the target text password based on the password input control, the method further includes: displaying a target object in the chat page, where the target object includes at least one of a target background image, a target candidate expression control set, and a target quick interaction control, and the target object is associated with the target candidate password or the target text password. In this way, after entering the chat page of the created target group chat, the corresponding target object is automatically determined based on the selected target candidate password or the input target text password, which reduces the setting operation of the target object, and the target object is associated with the target candidate password, which may further improve the interaction efficiency and interaction effect.

Exemplarily, the target background image is the background of the chat page. Taking the selection of the target candidate password as an example, the background image corresponding to each candidate password may be preset, and when the user enters the chat page after selecting the target candidate password, the background image corresponding to the target candidate password is acquired as the target background image and displayed in the chat page. For example, the background image corresponding to "happy family" may include an image of family photo-related content; the background image corresponding to "good luck in the New Year" may include an image of Spring Festival-related content such as fireworks or lanterns. Taking the input of the target text password as an example, the text content of the target text password may be identified, and the target image material matching the text content is automatically selected from the preset image library, and the target background image is determined based on the target image material.

Exemplarily, the target candidate expression control set may be a target expression package, and the target candidate expression control set may include a plurality of target candidate expression controls associated with the target candidate password. Taking the selection of the target candidate password as an example, the candidate expression control set corresponding to each candidate password may be preset, and when the user enters the chat page after selecting the target candidate password, the candidate expression control set corresponding to the target candidate password is acquired as the target candidate expression control set and displayed in the chat page. Optionally, the target candidate expression control set is displayed in the chat page in response to a trigger operation for an expression icon. Taking the input of the target text password as an example, the text content of the target text password may be identified, and the target expression control set matching the text content is automatically selected from the preset expression library as the target candidate expression control set.

Exemplarily, the target quick interaction control may be a control used to quickly trigger a preset interaction operation, such as triggering a "say hello" quick interaction control to trigger a dynamic effect of saying hello, and triggering a "watch together" quick interaction control to enable a content sharing function, and the like. Taking the selection of the target candidate password as an example, the quick interaction control corresponding to each candidate password may be preset, and when the user enters the chat page after selecting the target candidate password, the quick interaction control corresponding to the target candidate password is acquired as the target quick interaction control and displayed in the chat page. For example, the target quick interaction control corresponding to "happy family" may include "watch together"; the background image corresponding to "good luck in the New Year" may include "pay New Year greetings" and "send resources". Taking the input of the target text password as an example, the text content of the target text password may be identified, and the preset quick interaction control matching the text content is automatically selected from the preset quick interaction control library as the target quick interaction control.

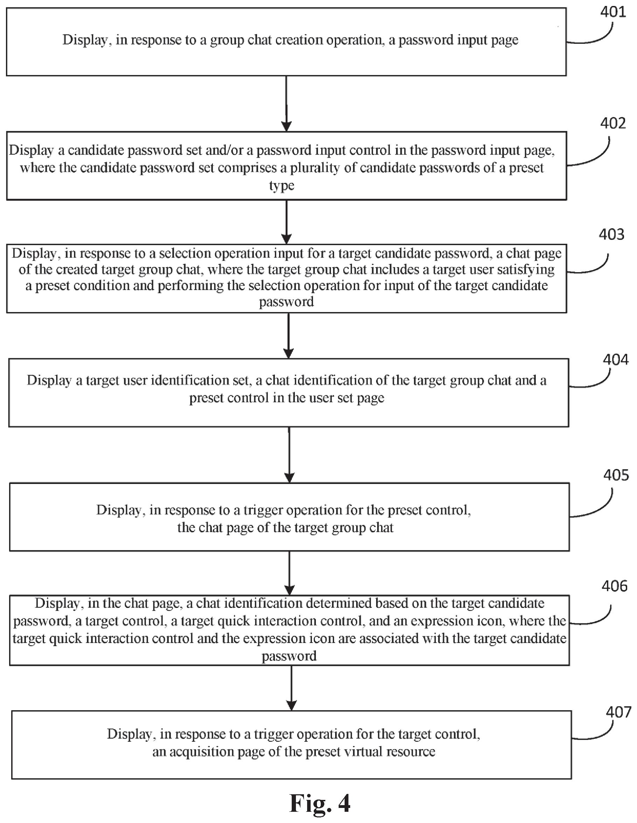

Fig. 4 is a schematic flowchart of another page display method provided by an embodiment of the present disclosure. The embodiment of the present disclosure is optimized on the basis of various optional solutions in the above embodiments. Specifically, the method includes the following steps.

Step 401: a password input page is displayed in response to a group chat creation operation input based on a preset entry in a preset page.

The preset page may be a preset media stream display page, the preset entry is included in preset media content in a preset media stream, and preset prompt information is displayed in an associated position of the preset entry in the preset page, and the preset prompt information is used to prompt to obtain a preset virtual resource by creating a group chat.

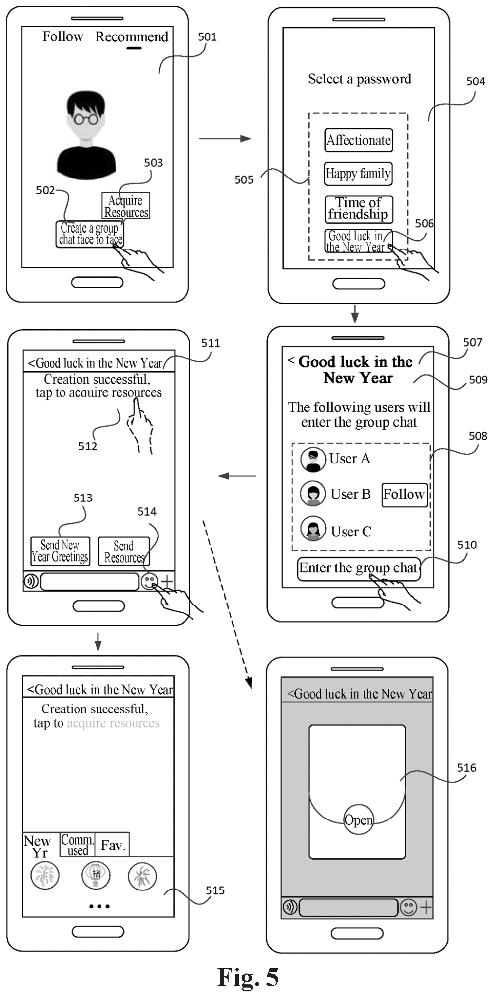

Fig. 5 is a schematic diagram of interface interaction of another page display method provided by an embodiment of the present disclosure. As shown in Fig. 5, preset media content is displayed in a preset media stream display page 501, the preset media content includes a preset entry 502, and preset prompt information 503 is displayed in an associated position of the preset entry 502. The preset prompt information is used to prompt to obtain a preset virtual resource by creating a group chat. After the user clicks on the preset entry 502, a password input page 504 is displayed.

Step 402: a candidate password set associated with the preset entry and a preset theme is displayed in the password input page, where the candidate password set includes a plurality of candidate passwords of a text type.

As shown in Fig. 5, a candidate password set 505 is displayed in the password input page 504, and the candidate password set 505 includes four candidate passwords of a text type associated with the Spring Festival theme and the preset entry in the preset media stream display page.

Step 403: a user set page of a created target group chat is displayed in response to a selection operation input for a target candidate password, where the target group chat includes a target user who meets a preset condition and inputs the selection operation for the target candidate password.

As shown in Fig. 5, after the user clicks on a target candidate password 506, the user set page 507 is displayed.

Step 404: displaying a target user identification set, a chat identification of the target group chat, and a preset control are displayed in the user set page.

As shown in Fig. 5, a target user identification set 508, a chat identification 509 of the target group chat, and a preset control 510 are displayed in the user set page 507.

Step 405: the chat page of the target group chat is displayed in response to a trigger operation for the preset control.

As shown in Fig. 5, after the user clicks on the preset control 510, the chat page 511 of the target group chat is displayed.

Step 406: the chat identification determined based on the target candidate password, a target control, a target quick interaction control, and an expression icon are displayed in the chat page, where the target quick interaction control and the expression icon are associated with the target candidate password.

As shown in Fig. 5, a target control 512, a target quick interaction control 513, and an expression icon 514 are displayed in the chat page. The target quick interaction control 513 includes "pay New Year greetings" and "send resources" quick interaction controls associated with "good luck in the New Year". After the user clicks on the expression icon, a target candidate expression control set 515 may be displayed in the chat page, which facilitates the user to quickly send expressions matching the group chat name, thereby improving the interaction efficiency and interaction effect.

Step 407: an acquisition page of a preset virtual resource is displayed in response to a trigger operation for the target control.

As shown in Fig. 5, after the user clicks on the target control 512, the acquisition page 516 of the preset virtual resource may be displayed, and the user may acquire the corresponding preset virtual resource through the acquisition page 516.

According to the page display method provided by the embodiment of the present disclosure, at the first user side, the password input page is displayed in response to the group chat creation operation input based on the preset entry in the preset page, the plurality of candidate passwords of the text type associated with the preset entry and the preset theme are displayed in the password input page, the user set page of the created target group chat is displayed in response to the selection operation input for the target candidate password, the user in the target group chat is determined based on the selection of the same candidate password, the target user identification set, the chat identification of the target group chat, and the preset control are displayed in the user set page, the chat page may be displayed by triggering the preset control, the virtual resource may be quickly acquired based on the target control displayed in the chat page, and quick interaction may be performed based on the target quick interaction control and the expression icon associated with the target candidate password. The solution may enhance the convenience of creating the group chat, and effectively improve the interaction efficiency and interaction effect.

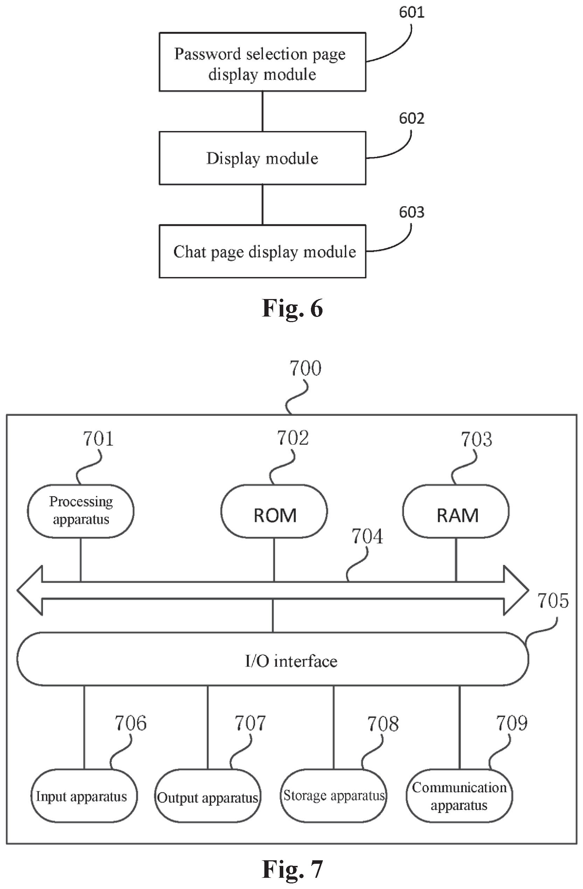

Fig. 6 is a schematic structural diagram of a page display apparatus provided by an embodiment of the present disclosure, which is configured at a first user side. As shown in Fig. 6, the apparatus includes:

a password input page display module 601, configured to display a password input page in response to a group chat creation operation;

a display module 602, configured to display a candidate password set and/or a password input control in the password input page, where the candidate password set includes a plurality of candidate passwords of a preset type;

a chat page display module 603, configured to create, in response to a selection operation input for the target candidate password or inputting the target text password based on the password input control, a target group chat and display a chat page of the created target group chat based on a target candidate password or a target text password, where the target candidate password is a candidate password in the candidate password set, and the target group chat includes at least the first user.

According to the page display apparatus provided by the embodiment of the present disclosure, at the first user side, the password input page is displayed in response to the group chat creation operation, the candidate password set including the plurality of candidate passwords of the preset type and/or the password input control are displayed in the password input page, the target group chat is created in response to the selection operation input for the target candidate password or inputting the target text password based on the password input control, and the chat page of the created target group chat is displayed, where the target group chat includes at least the first user. With the above technical solution, the chat page of the group chat is displayed based on the selection or input of the password, thereby improving the interaction efficiency and interaction effect.

Optionally, the target group chat includes a first target user who performs the selection operation for the target candidate password and/or a second target user who inputs the target text password based on the password input control.

Optionally, the chat page display module includes: a user set page displaying unit, configured to create the target group chat and display a user set page of the created target group chat in response to the selection operation input for the target candidate password or inputting the target text password based on the password input control; a set displaying unit, configured to display a target user identification set and a preset control in the user set page, where the target user identification set includes a user identification of the first target user and/or a user identification of the second target user; and a chat page displaying unit, configured to display the chat page of the target group chat based on the target candidate password or the target text password in response to a trigger operation for the preset control.

Optionally, the preset type includes a text type and/or an image type.

Optionally, the displaying a chat page of the created target group chat based on the target candidate password or the target text password includes: displaying the chat page of the created target group chat, and displaying a chat identification of the target group chat in the chat page, where the chat identification is determined based on the target candidate password or the target text password.

Optionally, the apparatus further includes: a chat identification display module, configured to display the chat identification of the target group chat in the user set page, where the chat identification is determined based on the target candidate password or the target text password.

Optionally, the apparatus further includes: a password editing module, configured to update the candidate password set in response to an edit operation for the candidate password set after the candidate password set is displayed in the password input page.

Optionally, the password input page display module is further configured to: display the password input page in response to a group chat creation operation input based on a preset entry, where the candidate password set is associated with the preset entry.

Optionally, the preset entry is included in preset media content in a preset media stream, and/or, the preset entry is included in a preset page; where preset prompt information is further displayed in the preset page, and the preset prompt information is used to prompt to obtain a preset virtual resource by creating a group chat.

Optionally, the password input page display module is further configured to: display the password input page in response to the group chat creation operation input based on the preset entry included in the preset page; the apparatus further includes: a target control display module, configured to, after the target group chat is created and the chat page of the created target group chat is displayed based on the target candidate password or the target text password in response to the selection operation input for the target candidate password or inputting the target text password based on the password input control, display a target control in the chat page; and an acquisition page display module, configured to display an acquisition page of the preset virtual resource in response to a trigger operation for the target control.

Optionally, the candidate password set is associated with a preset theme.

Optionally, the apparatus further includes: a target object display module, configured to, after the target group chat is created and the chat page of the created target group chat is displayed based on the target candidate password or the target text password in response to the selection operation input for the target candidate password or inputting the target text password based on the password input control, display a target object in the chat page, where the target object includes at least one of a target background image, a target candidate expression control set, and a target quick interaction control, and the target object is associated with the target candidate password or the target text password.

Optionally, the target group chat includes a target user satisfying a preset condition, and the preset condition includes a time condition and/or a spatial condition.

The page display apparatus provided by the embodiments of the present disclosure may perform the page display method provided by any embodiment of the present disclosure, and has corresponding functional modules and beneficial effects for performing the method.

It is worth noting that the units and modules included in the above apparatus are only divided according to functional logic, but are not limited to the above division, as long as the corresponding functions may be realized; in addition, the specific names of the functional units are only for the convenience of distinguishing from each other, and are not used to limit the protection scope of the embodiments of the present disclosure.

Fig. 7 is a schematic structural diagram of an electronic device provided by an embodiment of the present disclosure. Reference is made to Fig. 7 below, which illustrates a schematic structural diagram of an electronic device (such as the terminal device or the server in Fig. 7) 700 suitable for implementing the embodiments of the present disclosure. The terminal device in the embodiments of the present disclosure may include, but are not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in Fig. 7 is only an example, and should not impose any limitation on the functions and scope of use of the embodiments of the present disclosure.

As shown in Fig. 7, the electronic device 700 may include a processing apparatus (such as a central processing unit, and a graphics processing unit) 701, which may perform various appropriate actions and processing according to a program stored in a read-only memory (ROM) 702 or a program loaded from a storage apparatus 708 into a random access memory (RAM) 703. In the RAM 703, various programs and data required for operations of the electronic device 700 are also stored. The processing apparatus 701, the ROM 702, and the RAM 703 are connected to each other through a bus 704. An editing/output (I/O) interface 705 is also connected to the bus 704.

Usually, the following apparatuses may be connected to the I/O interface 705: an input apparatus 706 including, for example, a touch screen, a touchpad, a keyboard, a mouse, a camera, a microphone, an accelerometer, and a gyroscope; an output apparatus 707 including, for example, a liquid crystal display (LCD), a speaker, and a vibrator; the storage apparatus 708 including, for example, a magnetic tape and a hard disk; and a communication apparatus 709. The communication apparatus 709 may allow the electronic device 700 to be in wireless or wired communication with other devices to exchange data. Although Fig. 7 shows the electronic device 700 having various apparatuses, it should be understood that it is not required to implement or have all of the illustrated apparatuses. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, and the computer program includes program code for performing the method shown in the flowchart. In such an embodiment, the computer program may be downloaded and installed from a network through the communication apparatus 709, or installed from the storage apparatus 708, or installed from the ROM 702. When the computer program is executed by the processing apparatus 701, the above-mentioned functions defined in the method of the embodiments of the present disclosure are executed.

The names of messages or information exchanged between a plurality of apparatuses in the implementations of the present disclosure are only for illustrative purposes, and are not intended to limit the scope of these messages or information.

The electronic device provided by the embodiment of the present disclosure belongs to the same inventive concept as the page display method provided by the above embodiment. For technical details not described in detail in this embodiment, reference may be made to the above embodiment, and this embodiment has the same beneficial effects as the above embodiment.

An embodiment of the present disclosure provides a computer storage medium having a computer program stored thereon, where the program, when executed by a processor, implements the page display method provided by the above embodiments.

An embodiment of the present disclosure provides a computer program product including a computer program, where the program, when executed by a processor, implements the page display method provided by the above embodiments.

It should be noted that the above computer-readable medium in the present disclosure may be a computer-readable signal medium, a computer-readable storage medium, or any combination of the two. The computer-readable storage medium may be, for example, but is not limited to, an electronic, magnetic, optical, electromagnetic, infrared, or semiconductor system, apparatus or device, or any suitable combination of the above. More specific examples of the computer-readable storage medium may include, but are not limited to: an electrically connected portable computer magnetic disk having one or more wires, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated in a baseband or as a part of a carrier wave, and computer-readable program code is carried therein. The data signal propagated in this way may adopt multiple forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit a program used by or in combination with an instruction execution system, apparatus or device. The program code contained on the computer-readable medium may be transmitted by any suitable medium, including but not limited to: a wire, an optical cable, a radio frequency (RF), etc., or any suitable combination of the above.

In some implementations, the client and the server may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device, or may exist alone without being assembled into the electronic device.

The above computer-readable medium carries one or more programs, and when the one or more programs are executed by the electronic device, the electronic device: displays a password input page in response to a group chat creation operation; displays a candidate password set and/or a password input control in the password input page, where the candidate password set includes a plurality of candidate passwords of a preset type; creates a target group chat and displays a chat page of the created target group chat based on a target candidate password or a target text password in response to a selection operation input for the target candidate password or inputting the target text password based on the password input control, where the target candidate password is a candidate password in the candidate password set, and the target group chat includes at least the first user.

The computer program code for performing the operations of the present disclosure may be written in one or more programming languages or a combination thereof, the programming languages include but are not limited to object-oriented programming languages, such as Java, Smalltalk, and C++, and include conventional procedural programming languages, such as "C" language or similar programming languages. The program code may be executed entirely on a user computer, partly executed on a user computer, executed as an independent software package, partly executed on a user computer and partly executed on a remote computer, or entirely executed on a remote computer or a server. In the case of involving a remote computer, the remote computer may be connected to the user computer through any kind of network, including a local area network (LAN) or a wide area network (WAN), or may be connected to an external computer (for example, connected by using Internet provided by an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may redisplay a module, program segment, or part of code that includes one or more executable instructions for implementing the specified logical function. It should also be noted that, in some alternative implementations, the functions marked in the blocks may also occur in an order different from that marked in the drawings. For example, two blocks shown in succession may, in fact, be executed substantially concurrently, or the blocks may sometimes be executed in the reverse order, depending upon the functionality involved. It also should be noted that each block of the block diagrams and/or flowchart, and combinations of blocks in the block diagrams and/or flowchart, may be implemented by special purpose hardware-based systems that perform the specified functions or operations, or combinations of special purpose hardware and computer instructions.

The units involved in the embodiments of the present disclosure may be implemented by software or hardware. The name of the module does not constitute a limitation on the module itself under certain circumstances, for example, the password input page display module may also be described as "a module for displaying a password input page in response to a group chat creation operation".

The functions described above herein may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD) and more.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium would include an electrical connection on the basis of one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, a page display method is provided, which, on a first user side, includes: displaying a password input page in response to a group chat creation operation; displaying a candidate password set and/or a password input control in the password input page, where the candidate password set includes a plurality of candidate passwords of a preset type; and creating, in response to a selection operation input for the target candidate password or inputting the target text password based on the password input control, a target group chat and displaying a chat page of the created target group chat based on a target candidate password or a target text password, where the target candidate password is a candidate password in the candidate password set, and the target group chat includes at least the first user.

According to one or more embodiments of the present disclosure, the target group chat includes a first target user who performs the selection operation for the target candidate password and/or a second target user who inputs the target text password based on the password input control.

According to one or more embodiments of the present disclosure, the creating a target group chat and displaying a chat page of the created target group chat based on the target candidate password or the target text password in response to a selection operation input for the target candidate password or inputting the target text password based on the password input control includes: creating the target group chat and displaying a user set page of the created target group chat in response to the selection operation input for the target candidate password or inputting the target text password based on the password input control; displaying a target user identification set and a preset control in the user set page, where the target user identification set includes a user identification of the first target user and/or a user identification of the second target user; and displaying the chat page of the target group chat based on the target candidate password or the target text password in response to a trigger operation for the preset control.

According to one or more embodiments of the present disclosure, the preset type includes a text type and/or an image type.

According to one or more embodiments of the present disclosure, the displaying a chat page of the created target group chat based on the target candidate password or the target text password includes: displaying the chat page of the created target group chat, and displaying a chat identification of the target group chat in the chat page, where the chat identification is determined based on the target candidate password or the target text password.

According to one or more embodiments of the present disclosure, the method further includes: displaying the chat identification of the target group chat in the user set page, where the chat identification is determined based on the target candidate password or the target text password.

According to one or more embodiments of the present disclosure, after the displaying a candidate password set and/or a password input control in the password input page, the method further includes: updating the candidate password set in response to an edit operation for the candidate password set.

According to one or more embodiments of the present disclosure, the displaying a password input page in response to a group chat creation operation includes: displaying the password input page in response to a group chat creation operation input based on a preset entry, where the candidate password set is associated with the preset entry.

According to one or more embodiments of the present disclosure, the preset entry is included in preset media content in a preset media stream, and/or, the preset entry is included in a preset page; where preset prompt information is further displayed in the preset page, and the preset prompt information is used to prompt to obtain a preset virtual resource by creating a group chat.

According to one or more embodiments of the present disclosure, the displaying the password input page in response to the group chat creation operation input based on the preset entry includes: displaying the password input page in response to the group chat creation operation input based on the preset entry included in the preset page; where, after the creating the target group chat and displaying the chat page of the created target group chat based on the target candidate password or the target text password in response to the selection operation input for the target candidate password or inputting the target text password based on the password input control, the method further includes: displaying a target control in the chat page; and displaying an acquisition page of the preset virtual resource in response to a trigger operation for the target control.

According to one or more embodiments of the present disclosure, the candidate password set is associated with a preset theme.

According to one or more embodiments of the present disclosure, after the creating the target group chat and displaying the chat page of the created target group chat based on the target candidate password or the target text password in response to the selection operation input for the target candidate password or inputting the target text password based on the password input control, the method further includes: displaying a target object in the chat page, where the target object includes at least one of a target background image, a target candidate expression control set, and a target quick interaction control, and the target object is associated with the target candidate password or the target text password.

According to one or more embodiments of the present disclosure, the target group chat includes a target user satisfying a preset condition, the preset condition includes a time condition and/or a spatial condition.

According to one or more embodiments of the present disclosure, a page display apparatus is provided, which is configured at a first user side and includes: a password input page display module, configured to display a password input page in response to a group chat creation operation; a display module, configured to display a candidate password set and/or a password input control in the password input page, where the candidate password set includes a plurality of candidate passwords of a preset type; and a chat page display module, configured to create, in response to a selection operation input for the target candidate password or inputting the target text password based on the password input control, a target group chat and display a chat page of the created target group chat based on a target candidate password or a target text password, where the target candidate password is a candidate password in the candidate password set, and the target group chat includes at least the first user.

According to one or more embodiments of the present disclosure, an electronic device is provided, the electronic device includes: one or more processors, a storage apparatus, configured to store one or more programs, the one or more programs, when executed by the one or more processors, cause the one or more processors to implement the page display method provided by the embodiments of the present disclosure.

According to one or more embodiments of the present disclosure, a storage medium including computer-executable instructions is provided, the computer-executable instructions, when executed by a computer processor, are used to perform the page display method provided by the embodiments of the present disclosure.

The above description is merely illustration of preferred embodiments of the present disclosure and applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above concept of disclosure. For example, the above features and the technical features provided in the present disclosure (but not limited to) with similar functions may be replaced each other to form a technical solution.

In addition, although the operations are depicted in a specific order, this should not be understood as requiring the operations to be performed in the specific order shown or in a sequential order. Under certain circumstances, multitasking and parallel processing may be advantageous. Likewise, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in a plurality of embodiments individually or in any suitable subcombination.

Although the subject matter has been described in language specific to structural features and/or logical actions of the method, it should be understood that the subject matter defined in the appended claims is not necessarily limited to the specific features or actions described above. On the contrary, the specific features and actions described above are merely exemplary forms for implementing the claims.

## Claims

1. A page display method, at a first user side, comprising:
displaying, in response to a group chat creation operation, a password input page;
displaying a candidate password set and/or a password input control in the password input page, wherein the candidate password set comprises a plurality of candidate passwords of a preset type;
creating, in response to a selection operation input for a target candidate password or inputting a target text password based on the password input control, a target group chat, and displaying, based on the target candidate password or the target text password, a chat page of the created target group chat, wherein the target candidate password is a candidate password in the candidate password set, and the target group chat comprises at least the first user.

2. The method of claim 1, wherein the target group chat comprises a first target user who performs the selection operation for the target candidate password and/or a second target user who inputs the target text password based on the password input control.

3. The method of claim 2, wherein creating, in response to the selection operation input for the target candidate password or inputting the target text password based on the password input control, the target group chat, and displaying, based on the target candidate password or the target text password, the chat page of the created target group chat comprises:
creating, in response to the selection operation input for the target candidate password or inputting the target text password based on the password input control, the target group chat, and displaying a user set page of the created target group chat;
displaying a target user identification set and a preset control in the user set page, wherein the target user identification set comprises a user identification of the first target user and/or a user identification of the second target user;
displaying, in response to a trigger operation for the preset control, the chat page of the target group chat based on the target candidate password or the target text password.

4. The method of claim 1, wherein the preset type comprises a text type and/or an image type.

5. The method of claim 1, wherein displaying, based on the target candidate password or the target text password, the chat page of the created target group chat comprises:
displaying the chat page of the created target group chat, and displaying a chat identification of the target group chat in the chat page, wherein the chat identification is determined based on the target candidate password or the target text password.

6. The method of claim 3, further comprising:
displaying a chat identification of the target group chat in the user set page, wherein the chat identification is determined based on the target candidate password or the target text password.

7. The method of claim 1, wherein after displaying the candidate password set and/or the password input control in the password input page, the method further comprises:
updating, in response to an edit operation for the candidate password set, the candidate password set.

8. The method of claim 1, wherein displaying, in response to the group chat creation operation, the password input page comprises:
displaying, in response to a group chat creation operation input based on a preset entry, the password input page, wherein the candidate password set is associated with the preset entry.

9. The method of claim 8, wherein the preset entry is included in preset media content in a preset media stream, and/or, the preset entry is included in a preset page, wherein preset prompt information is further displayed in the preset page, and the preset prompt information is configured to prompt to obtain a preset virtual resource by creating a group chat.

10. The method of claim 9, wherein displaying, in response to the group chat creation operation input based on the preset entry, the password input page comprises:
displaying, in response to the group chat creation operation input based on the preset entry included in the preset page, the password input page;
wherein after creating, in response to the selection operation input for the target candidate password or inputting the target text password based on the password input control, the target group chat, and displaying, based on the target candidate password or the target text password, the chat page of the created target group chat, the method further comprises:
displaying a target control in the chat page; and
displaying, in response to a trigger operation for the target control, an acquisition page of the preset virtual resource.

11. The method of claim 1, wherein the candidate password set is associated with a preset theme.

12. The method of claim 1, wherein after creating, in response to the selection operation input for the target candidate password or inputting the target text password based on the password input control, the target group chat, and displaying, based on the target candidate password or the target text password, the chat page of the created target group chat, the method further comprises:
displaying a target object in the chat page, wherein the target object comprises at least one of a target background image, a target candidate expression control set, and a target quick interaction control, and the target object is associated with the target candidate password or the target text password.

13. The method of claim 1, wherein the target group chat comprises a target user satisfying a preset condition, the preset condition comprises a time condition and/or a spatial condition.

14. A page display apparatus, configured at a first user side and comprising:
a password input page display module, configured to display, in response to a group chat creation operation, a password input page;
a display module, configured to display, in the password input page, a candidate password set and/or a password input control, wherein the candidate password set comprises a plurality of candidate passwords of a preset type;
a chat page display module, configured to create, in response to a selection operation input for a target candidate password or inputting a target text password based on the password input control, a target group chat and display, based on the target candidate password or the target text password, a chat page of the created target group chat, wherein the target candidate password is a candidate password in the candidate password set, and the target group chat comprises at least the first user.

15. An electronic device, comprising:
one or more processors,
a storage apparatus, configured to store one or more programs,
the one or more programs, when executed by the one or more processors, cause the one or more processors to implement the page display method of any of claims 1 to 13.

16. A storage medium comprising computer-executable instructions, the computer-executable instructions, when executed by a computer processor, are configured to perform the page display method of any of claims 1 to 13.
